# EUROPEAN PATENT APPLICATION

(11) **EP 1 746 242 A2**
(43) Date of publication of application: **24.01.2007**
(21) Application number: 06253773.3
(22) Date of filing: 19.07.2006
(51) Int. Cl.: E06B 5/16

(54) **Fire door**

(30) Priority: 21.07.2005 GB 0514973
(71) Applicant: Environmental Seals Ltd., Nr. Dover Kent CT15 7JG (GB)
(72) Inventor: Ward, Derek Alfred, Maydensole Dover, Kent CT15 5HR (GB)
(74) Representative: Townsend, Victoria Jayne

(57) **Abstract**

A fire door comprising a laminate assembly including plywood panels, a sheet glass fibre cloth and a sheet of intumescent material.

## Description

This invention relates to fire doors.

Conventional fire doors are extremely heavy, difficult to install, expensive and provide relatively limited protection as a barrier against smoke and flames. One reason for the weight and consequent installation problems is the use of heavy gauge metal sheets to inhibit the progress of smoke and flames. Because of these problems, fire doors are used sparingly and generally only at key access points. This limited use can lead to a more rapid spread of a fire than would otherwise be the case if fire doors were used on all access points instead of only a selection of such access points.

One object of the present invention is to provide a relatively lightweight and easy to install firedoor door which offers full protection against the passage of smoke and flames for periods in excess of thirty minutes.

Fire protection periods in excess of such periods have been achieved in fire testing of doors in accordance with the invention; this compares very favourably with fire protection periods offered by conventional fire doors.

In one aspect, the invention provides a fire door comprising a laminate assembly, including at least two plywood panels, a sheet of glass fibre cloth and a sheet of intumescent material.

Preferably the laminate layers comprise in sequence a plywood panel, a sheet of ceramic cloth, an mdf panel, a sheet of intumsecent material, an mdf panel, a sheet of glass fibre cloth and a plywood panel.

Once assembled, the fire door has the weight and appearance of a conventional interior or exterior door.

The invention will now be described by way of example only, with reference to the accompanying diagrammatic drawing which is a cross-sectional view of a fire door constructed in accordance with the invention

The fire door 2 comprises a laminated assembly of plywood panels 4, medium density flreboard (mdf) panels 6, glass fibre cloth sheets 8 and intumescent material sheets 10.

More specifically, the layers of the assembly comprise in sequence a plywood panel 4a, typically the thickness of which is 4mm, a sheet of glass fibre cloth 6a, an mdf panel 8a, typically the thickness of which is 25 mm, an intumescent sheet layer 10 (such as for example, calcium paper with intumescent material impregnated or otherwise located thereon), a further mdf panel 8b, a further sheet of glass fibre cloth 6b and a further plywood panel 4b.

The sheet of glass fibre containing cloth 6 may comprise a woven ceramic cloth, which may include a filament matrix to provide added integrity.

The glass cloth 6 and the intumescent paper sheets 10 are adhered in place typically using an acrylic exotropic adhesive including a quantity of intumescent material.

Alternatively, the layers may be retained together by screws or similar mechanism.

In the event of fire, the intumescent content of the panels rapidly expands to create an effective barrier to the passage of fire, heat and smoke for up to two hours.

The mdf panels 8 can be replaced by panels of plywood, blockboard, timber, timber plates or similar wood materials. It has been found, however, that mdf has greater stability and burns less quickly than other materials and as such provides a greater longevity to fire resistance.

From the foregoing, it will be appreciated that the fire doors described are of relatively lightweight and replicate the appearance, weight and other characteristics of a conventional plywood door.

It will be appreciated that the foregoing is merely exemplary of fire doors in accordance with the invention and that modifications can readily be made thereto without departing from the true scope of the invention.

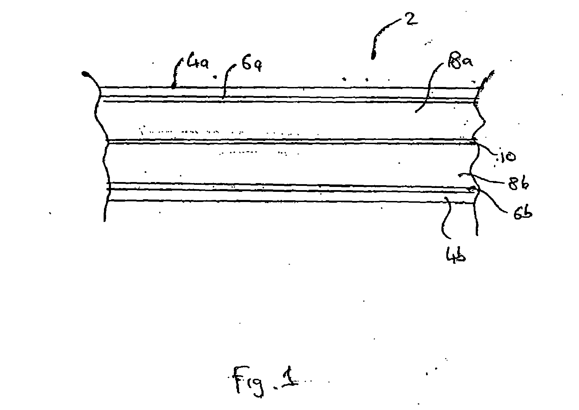

## Claims

1. A fire door comprising a laminate assembly, including at least two plywood panels, a sheet of glass fibre cloth and a sheet of intumescent material.

2. A fire door according to claim 1, wherein the laminate layers comprise in sequence a plywood panel, a sheet of ceramic cloth, an mdf panel, a sheet of intumescent material, an mdf panel, a sheet of glass fibre cloth and a plywood panel.

3. A fire door according to claim 1 or claim 2, wherein the intumescent sheet comprises calcium paper including an intumescent material.

4. A fire door according to any one of claims 1 to 3, wherein the sheet of glass fibre cloth comprises a woven ceramic cloth.

5. A fire door according to claim 4, wherein the woven cloth includes a filament matrix to provide added integrity.

6. A fire door as claimed in any one of claims 1 to 5, wherein the glass cloth and the intumescent paper sheets are adhered within the laminate structure using an acrylic exotropic adhesive including a quantity of intumescent material.
